# EUROPÄISCHE PATENTSCHRIFT

(11) **EP 0 803 508 B1**
(45) Veröffentlichungstag und Bekanntmachung des Hinweises auf die Patenterteilung: **10.10.2001**
(21) Anmeldenummer: 97105717.9
(22) Anmeldetag: 07.04.1997
(51) Int. Cl.: C07F 9/30

(54) **Verfahren zur Herstellung von Aluminiumsalzen von Phosphinsäuren**
Process for the preparation of aluminium salts of phosphinic acids
Procédé de préparation de sels d'aluminium d'acides phosphiniques

(30) Priorität: 23.04.1996 DE 19616025
(43) Veröffentlichungstag der Anmeldung: 29.10.1997
(73) Patentinhaber: Ticona GmbH, 65451 Kelsterbach (DE)
(72) Erfinder: Kleiner, Hans-Jerg, Dr., 61476 Kronberg (DE)

(56) Entgegenhaltungen:
- EP-A- 0 699 708
- FR-A- 1 558 606
- TRANSITION MET. CHEM. (WEINHEIM, GER.) (TMCHDN,03404285);81; VOL.6 (2); PP.79-82, BEAVER COLL.;DEP. CHEM. PHYS.; GLENSIDE; 19038; PA; USA, XP000675826 MIKULSKI C M ET AL: "Methylphenylphosphinate complexes with tri- and tetra-positive metal ions"
- J. POLYM. SCI., PART A-1 (JPLCAT);70; VOL.8 (1); PP.1-14, DOW CHEM. CO.;MIDLAND; MICH., XP000676830 FLAGG E E ET AL: "Poly[tris(diorganophosphinato)alanes]"
- Z. NATURFORSCH., B: CHEM. SCI. (ZNBSEN,09320776);91; VOL.46 (11); PP.1568-70, UNIV. UNITED ARAB EMIRATES;COLL. SCI.; UNITED ARAB EMIRATES (AE), XP000674673 SHIHADA A F ET AL: "Preparation and vibrational spectra of Me2Sn(O2PMe2)2, Cl2Sn(O2PMe2)2, and Al(O2PMe2)3"

## Beschreibung

Die Erfindung betrifft ein Verfahren zur Herstellung von Aluminiumsalzen von Phosphinsäuren.

Aluminiumsalze von Phosphinsäuren sind als wertvolle Flammhemm-Mittel bekannt. Ihre Herstellung erfolgt bisher aus den entsprechenden Phosphinsäuren mit Aluminiumhydroxyd im Wasser bei ca. 80 - 100°C. Beispielsweise erhält man aus Ethyl-methylphosphinsäure und Aluminiumhydroxyd und insgesamt 65 Stunden Reaktionszeit das erwünschte Salz in 95 %iger Ausbeute (DE-OS 44 30 932). Nachteilig ist bei diesem technisch interessanten Verfahren die lange Reaktionsdauer. Weiterhin ist es ungünstig, die Salzherstellung ausgehend von den Phosphinsäuren durchzuführen, da die Phosphinsäuren aus den entsprechenden Phosphinsäureestern durch Hydrolyse bei hohen Temperaturen hergestellt werden müssen. Außerdem ist ein Verfahren zur Herstellung von Polymetallphosphinaten bekannt, bei dem Methylphenylphosphinsäureester mit Aluminiumchlorid zu Polyaluminium-phosphinaten umgesetzt werden. Die Ausbeuten bei diesem Verfahren sind fast quantitativ (C.M. Mikulski et al., Transition Met. Chem. 6, 79 (1981). Nachteilig ist bei diesem Verfahren, daß der Phosphinsäureester im großen Überschuß eingesetzt werden muß, wobei die Reaktionstemperatur zwischen 50 - 200°C gehalten werden soll. Der " Überschuß beträgt etwa das 4- bis 5-fache der theoretischen Menge (15 bis 20 cm³ pro Gramm Aluminiumchlorid).

Es bestand daher ein Bedarf nach einem vereinfachten Verfahren, das es ermöglicht, in einfacher Weise ausgehend von Phosphinsäureestern direkt zu den Aluminiumsalzen der Phosphinsäuren zu gelangen.

Diese Aufgabe wird überraschenderweise gelöst durch ein Verfahren zur Herstellung von Aluminiumsalzen von Phosphinsäuren der Formel (I) 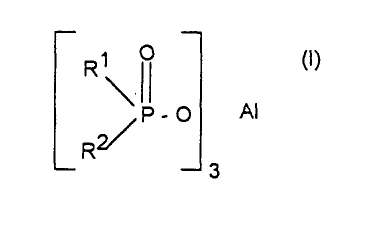 worin R¹ und R² unabhängig voneinander linear oder verzweigt, (C₁-C₆)-Alkyl oder Phenyl bedeuten, dadurch gekennzeichnet, daß man Phosphinsäureester der Formel (II) 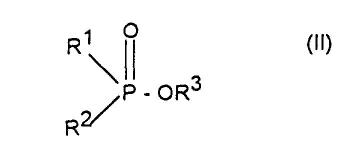 worin R¹ und R² die oben angegebene Bedeutung haben und R³ C₁-C₆-Alkyl bedeutet, mit Aluminiumchlorid im Molverhältnis 2,5:1 bis 4:1 umsetzt.

Wichtig ist die Umsetzung von Verbindungen der Formel (II), worin R¹, R² und R³ (C₁-C₄)-Alkyl, insbesondere Methyl, Ethyl, n-Propyl oder i-Butyl bedeuten.

Von besonderem Interesse ist die Umsetzung von Dimethylphosphinsäuremethylester, Ethyl-methylphosphinsäureethylester, Ethyl-methylphosphinsäurebutylester, Ethyl-methylphosphinsäureamylester, Ethylpropylphosphinsäure-n-butylester, Propyl-methylphosphinsäure-n-butylester, Isobutyl-methylphosphinsäure-n-butylester, Hexyl-methylphosphinsäure-n-butylester, Diphenylphosphinsäuremethylester.

Das Verfahren wird so durchgeführt, daß zu dem Ester das Aluminiumchlorid im Molverhältnis 2,5:1 bis 4:1 zudosiert wird, gegebenenfalls unter Kühlung, dabei löst sich überraschenderweise das Aluminiumchlorid. Vorteilhaft ist es Phosphinsäureester:Aluminiumchlorid im Molverhältnis von 2,8:1 bis 3,5:1, insbesondere 3:1 einzusetzen. Nach beendetem Lösungsvorgang wird die Temperatur erhöht, dabei setzt die Reaktion ein und das Aluminiumsalz der Phosphinsäure fällt aus. Insbesondere wenn R³ = C₁-C₃-Alkyl ist, kann die Reaktion auch stark exotherm sein, dann muß gegebenenfalls nach Erreichen der Reaktionstemperatur unter Kühlung gearbeitet werden. Es kann weiterhin zweckmäßig sein, bei der Reaktionstemperatur portionsweise das Aluminiumchlorid einzutragen bei gleichzeitigem Anfall des Endproduktes, dadurch ist das Verfahren sicherheitstechnisch einfacher zu gestalten.

Als Reaktionstemperatur hat sich der Temperaturbereich von 40 - 120°C, insbesondere 50 - 80°C bewährt. Es kann weiterhin zweckmäßig sein, inerte Lösungsmittel zuzusetzen, insbesondere Isobutylchlorid, Pentylchlorid, Toluol oder Xylol. Zum Ende der Reaktion, wenn Chloridionen nur noch geringfügig nachgewiesen werden können, können auch Alkohole oder Aceton, Ethylmethylketon oder Acetonitril als Verdünnungsmittel eingesetzt werden. Die anfallenden Salze sind herstellungsgemäß praktisch frei von Wasser und benötigen daher keine aufwendige Trocknungsmaßnahmen. Sie sind direkt ohne weitere Reinigungsoperationen einsetzbar.

### Beispiel 1

In 81,6 g (0,6 Mol) Ethyl-methylphosphinsäureethylester werden 26,7 g (0,2 Mol) Aluminiumchlorid unter Kühlung portionsweise eingetragen, die Temperatur steigt infolge der exothermen Reaktion auf 70°C. Gleichzeitig gast Ethylchlorid ab, das in einer der Apparatur nachgeschalteten Kühlfalle verbleibt. Nach Eintragung der Gesamtmenge Aluminiumchlorid wird langsam auf 100°C erhitzt und solange gehalten, bis kein Abgas mehr zu erkennen war. Der Reaktionsansatz besteht jetzt aus ca. 69 g Aluminiumsalz der Ethylmethylphosphinsäure mit einem Wassergehalt von 200 ppm. Der Schmelzpunkt liegt oberhalb 360°C. Die Ausbeute beträgt fast 100 % d.Th..

### Beispiel 2

In 98,4 g (0,6 Mol) Ethyl-methylphosphinsäure-n-butylester werden unter Rühren 26,7 g (0,2 Mol) Aluminiumchlorid portionsweise unter Kühlung eingetragen, dabei löst sich das Aluminiumchlorid auf. Anschließend wird auf 70 bis 80°C erhitzt, wobei Rückfluß einsetzt. Dabei beginnt das Aluminiumsalz der Ethyl-methylphosphinsäure auszufallen. Zur Verdünnung werden im Laufe der Reaktion 100 ml Isobutylchlorid zugesetzt. Die Umsetzung verläuft bei ca. 70°C. Nach 12 Stunden Rückfluß wird gekühlt und abgesaugt, danach mit Isobutylchlorid gewaschen. Nach kurzer Trocknung im Vakuum-Trockenschrank bei 100°C erhält man 63 g Aluminiumsalz der Ethylmethylphosphinsäure mit einem Wassergehalt von 200 ppm. Der Schmelzpunkt liegt oberhalb 360°C. Die Ausbeute beträgt 91 % d.Th..

## Patentansprüche

1. Verfahren zur Herstellung von Aluminiumsalzen von Phosphinsäuren der Formel (I) 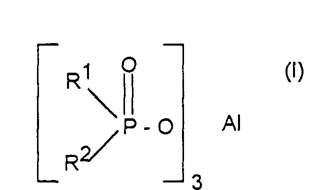 worin R¹ und R² unabhängig voneinander linear oder verzweigt (C₁-C₆)-Alkyl oder Phenyl bedeuten, **dadurch gekennzeichnet, daß** man Phosphinsäureester der Formel (II) 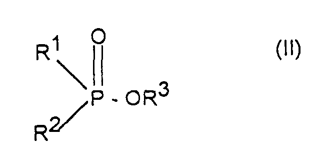 worin R¹ und R² die oben angegebene Bedeutung haben und R³ C₁-C₆-Alkyl bedeutet, mit Aluminiumchlorid im Molverhältnis 2,5:1 bis 4:1 umsetzt.

2. Verfahren nach Anspruch 1, **dadurch gekennzeichnet, daß** R¹, R² und R³ (C₁-C₄)-Alkyl, insbesondere Methyl, Ethyl, n-Propyl oder i-Butyl bedeuten.

3. Verfahren nach Anspruch 1, **dadurch gekennzeichnet, daß** als Verbindung der Formel (II) Dimethylphosphinsäuremethylester, Ethylmethylphosphinsäureethylester, Ethyl-methylphosphinsäurebutylester, Ethyl-methylphosphinsäureamylester, Ethyl-propylphosphinsäure-n-butylester, Propyl-methylphosphinsäure-n-butylester, Isobutylmethylphosphinsäure-n-butylester, Hexyl-methylphosphinsäure-n-butylester oder Diphenylphosphinsäuremethylester eingesetzt wird.

4. Verfahren nach Anspruch 1 bis 3, **dadurch gekennzeichnet, daß** der Ester der Formel (II) vorgelegt und das Aluminiumchlorid zudosiert und anschließend die Temperatur auf 40 bis 120°C, insbesondere 50 bis 80°C erhöht wird.

5. Verfahren nach Anspruch 1 bis 4, **dadurch gekennzeichnet, daß** ein inertes Lösungsmittel, insbesondere Isobutylchlorid, Pentylchlorid, Toluol oder Xylol zugegeben wird.

6. Verfahren nach Anspruch 1 bis 5, **dadurch gekennzeichnet, daß** das Molverhältnis Phosphinsäureester:Aluminiumchlorid 2,8:1 bis 3,5:1, insbesondere 3:1 beträgt.

## Claims

1. A process for producing aluminum phosphinates of the formula (I) 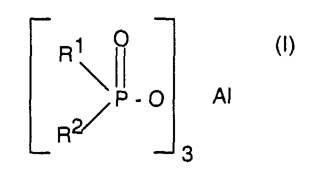 where R¹ and R², independently of each other, are linear or branched (C₁-C₆)-alkyl or phenyl, which comprises reacting phosphinates of the formula (II) 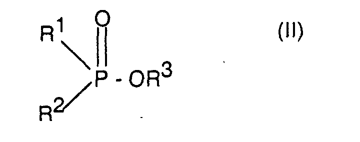 where R¹ and R² are as previously stated and R³ is C₁-C₆-alkyl, with aluminum chloride in a molar ratio of from 2.5:1 to 4:1.

2. The process as claimed in claim 1, wherein R¹, R² and R³ are (C₁-C₄)-alkyl, in particular methyl, ethyl, n-propyl or isobutyl.

3. The process as claimed in claim 1, wherein the compound of formula (II) is methyl dimethylphosphinate, ethyl ethylmethylphosphinate, butyl ethylmethylphosphinate, amyl ethylmethylphosphinate, n-butyl ethylpropylphosphinate, n-butyl propylmethylphosphinate, n-butyl isobutylmethylphosphinate, n-butyl hexylmethylphosphinate or methyl diphenylphosphinate.

4. The process as claimed in claims 1 to 3, wherein the ester of formula (II) is the initial charge, the aluminum chloride is metered in and then the temperature is raised to from 40 to 120°C, in particular from 50 to 80°C.

5. The process as claimed in claims 1 to 4, wherein an inert solvent, in particular isobutyl chloride, pentyl chloride, toluene or xylene, is added.

6. The process as claimed in claims 1 to 5, wherein the phosphinate:aluminum chloride molar ratio is from 2.8:1 to 3.5:1, in particular 3:1.

## Revendications

1. Procédé pour la préparation de sels d'aluminium d'acides phosphiniques de formule (I) 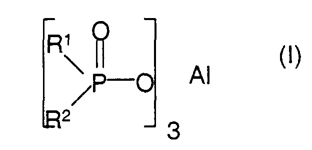 dans laquelle R¹ et R² représentent, indépendamment l'un de l'autre, un groupe alkyle en C₁-C₆ ou phényle, **caractérisé en ce qu'**on fait réagir des esters d'acides phosphiniques de formule (II) 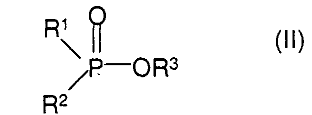 dans laquelle R¹ et R² ont les significations données ci-dessus et R³ représente un groupe alkyle en C₁-C₆, avec du chlorure d'aluminium en un rapport molaire de 2,5:1 à 4:1.

2. Procédé selon la revendication 1, **caractérisé en ce que** R¹, R² et R³ représentent des groupes alkyle en C₁-C₄, en particulier le groupe méthyle, éthyle, n-propyle ou isobutyle.

3. Procédé selon la revendication 1, **caractérisé en ce qu'**on utilise comme composé de formule (II) l'ester méthylique d'acide diméthylphosphinique, l'ester éthylique d'acide éthylméthylphosphinique, l'ester butylique d'acide éthylméthylphosphinique, l'ester amylique d'acide éthylméthylphosphinique, l'ester n-butylique d'acide éthylpropylphosphinique, l'ester n-butylique d'acide propylméthylphosphinique, l'ester n-butylique d'acide isobutylméthylphosphinique, l'ester n-butylique d'acide hexylméthylphosphinique ou l'ester méthylique d'acide diphénylphosphinique.

4. Procédé selon l'une quelconque des revendications 1 à 3, **caractérisé en ce qu'**on dispose au préalable l'ester de formule (II) et on ajoute de façon réglée le chlorure d'aluminium, et on élève ensuite la température à 40-120°C, en particulier à 50-80°C.

5. Procédé selon l'une quelconque des revendications 1 à 4, **caractérisé en ce qu'**on ajoute un solvant inerte, en particulier du chlorure d'isobutyle, du chlorure de pentyle, du toluène ou du xylène.

6. Procédé selon l'une quelconque des revendications 1 à 5, **caractérisé en ce que** le rapport molaire ester d'acide phosphinique:chlorure d'aluminium va de 2,8:1 à 3,5:1, en particulier est 3:1.
